# EUROPÄISCHE PATENTSCHRIFT

(11) **EP 0 738 834 B1**
(45) Veröffentlichungstag und Bekanntmachung des Hinweises auf die Patenterteilung: **14.10.1998**
(21) Anmeldenummer: 96104917.8
(22) Anmeldetag: 28.03.1996
(51) Int. Cl.: F16B 13/14

(54) **Dübel mit einer Siebhülse**
Dowel with screen-type sleeve
Cheville à enveloppe en forme de crible

(30) Priorität: 20.04.1995 DE 19514530
(43) Veröffentlichungstag der Anmeldung: 23.10.1996
(73) Patentinhaber: Adolf Würth GmbH & Co. KG, 74653 Künzelsau (DE)
(72) Erfinder: Kerl Gregor, D-74676 Niederhall (DE)
(74) Vertreter: Patentanwälte Ruff, Beier, Schöndorf und Mütschele

(56) Entgegenhaltungen:
- EP-A- 0 172 134
- EP-A- 0 338 982
- DE-U- 8 613 998
- DE-U- 9 005 451

## Beschreibung

Die Erfindung geht aus von einem Dübel mit einer metallischen Siebhülse und einem zur Aufnahme in der Siebhülse ausgebildeten Verankerungselement.

Dübel dieser Art dienen dazu, das Verankerungselement mit Hilfe einer aushärtenden Masse in einem Mauerwerk o. dgl. zu verankern. In ein Loch wird zunächst die Dübelhülse eingesetzt, bis sie mit einem Flansch an ihrem äußeren Ende mit der Oberfläche der Wand im wesentlichen bündig verläuft. Anschließend wird die aushärtende Masse unter Druck in das Innere der Dübelhülse eingebracht und danach das Verankerungselement eingesetzt. Bei dem Aushärten der aushärtenden Masse entsteht eine formschlüssige Klebeverbindung zwischen dem Verankerungselement, der Dübelhülse und der Wand des Lochs.

Es ist bereits ein Dübel dieser Art bekannt (EP-A-172 134), bei dem die Siebhülse aus einem Drahtgewebe besteht. Im Bereich des äußeren Endes der Dübelhülse ist das Drahtgewebe nach außen zur Bildung eines Flanschs und dann nochmals in der gleichen Richtung umgefaltet, so daß die Dübelhülse im äußeren Bereich doppelwandig ist. Es können an der Außenseite Vorsprünge zur zentrierten Ausrichtung der Dübelhülse im Bohrloch angeformt sein.

Ebenfalls bekannt ist ein Befestigungselement für ein Hohlräume aufweisendes Mauerwerk (DE-U1-8613998), bei dem die Hülse aus Maschendraht hergestellt ist und einen Hülsenboden aus Kunststoff und am gegenüberliegenden Ende eine Hülsenbuchse ebenfalls aus Kunststoff aufweist. In die Hülsenbuchse kann dann noch eine Kunststoffhülse eingeschoben werden, die zur Zentrierung des Verankerungselements dienen kann.

Weiterhin bekannt ist ein Dübel mit siebartiger Hülse (EP-A-338 982), bei dem die Siebhülse aus Streckmetall hergestellt ist. Die Dübelhülse weist im Bereich ihres äußeren Endes eine Erweiterung auf, die sich an den zylindrischen Teil der Dübelhülse anschließt. Das äußere Ende ist nach außen doppelt umgeschlagen, zur Bildung eines Flanschs. Auch hier kann die Dübelhülse nach außen gerichtete Vorsprünge zur Zentrierung aufweisen.

Bei den bekannten Dübeln dieser Art ist zwar für eine zentrierte Ausrichtung der Dübelhülse gegenüber dem Loch in der Wand gesorgt, nicht jedoch für eine Ausrichtung des Verbindungselements in der Dübelhülse selbst.

Der Erfindung liegt die Aufgabe zugrunde, einen Dübel mit einer siebartigen Hülse zu schaffen, der bei einfachem Aufbau und kostengünstiger Herstellung eine verbesserte Befestigung des Verbindungselements ermöglicht.

Zur Lösung dieser Aufgabe schlägt die Erfindung einen Dübel mit den im Anspruch 1 aufgeführten Merkmalen vor. Weiterbildungen der Erfindung sind Gegenstand von Unteransprüchen.

Durch die Anordnung eines Zentriertrichterelements wird nicht nur das Einführen des Verbindungselements in die in dem Loch schon angeordnete Dübelhülse erleichtert, sondern auch eine Zentrierung des Verbindungselements gegenüber der Dübelhülse, die dafür sorgt, daß zwischen dem Verbindungselement und der Innenwand der Dübelhülse überall ein möglichst gleicher radialer Abstand vorhanden ist, in dem das aushärtende Material gleichmäßig untergebracht sein kann.

Insbesondere schlägt die Erfindung vor, daß der Innendurchmesser der Trichtereinrichtung kleiner als der Innendurchmesser der Dübelhülse ist.

Für die Trichtereinrichtung kann es ausreichen, wenn an mehreren Stellen über den Umfang verteilt Vorsprünge angeordnet sind, die die Zentrierung und Ausrichtung übernehmen.

Insbesondere günstig ist es jedoch, wenn, wie die Erfindung weiterhin vorschlägt, vorgesehen ist, daß die Trichtereinrichtung einen im wesentlichen geschlossenen Innenrand aufweist.

Der im wesentlichen geschlossene Rand der Trichteröffnung führt dazu, daß an dieser Stelle eine Verengung vorhanden ist, deren Innendurchmesser etwa dem Außendurchmesser des Verbindungselements, beispielsweise einem Gewindebolzen, entspricht. Der Gewindebolzen wird in die Dübelhülse erst eingedrückt, nachdem in das innere der Dübelhülse das später aushärtende Material eingebracht wurde. Beim Eindrücken des Verbindungselements wird dieses Material sowohl radial nach außen als auch weiter in das Innere des Dübellochs eingedrückt. Ein Teil des Materials wird aber aufgrund der Verdrängungswirkung des Verbindungselements auch nach vorne gedrückt. Durch die Verengung, die durch die Trichtereinrichtung entsteht, wird verhindert, daß das Material sich nach vorne aus dem Dübel wieder herausdrückt.

Insbesondere günstig ist es, wenn die Trichtereinrichtung einen Hinterschnitt bildet. In diesem Fall wird dann nach vorne gedrücktes Material nicht nur am Austreten zur äußeren Stirnseite der Dübelhülse gehindert, sondern aufgrund des Hinterschnitts seitlich abgedrängt, so daß es dort zur Verbesserung der Halterung dient.

Zur erleichterten und vereinfachten Herstellung ist erfindungsgemäß vorgesehen, daß die Trichtereinrichtung durch Umfalten des Drahtgeflechts der Dübelhülse nach innen hergestellt wird. Auf diese Weise läßt sich die Trichtereinrichtung insbesondere mit dem verengten inneren Rand sehr einfach herstellen.

Ebenfalls vorgesehen sein kann, daß der an der äußeren Stirnseite der Dübelhülse angeordnete Flansch durch Umfalten des Drahtgeflechts nach außen hergestellt sein kann.

Zur Ausrichtung der Dübelhülse in dem Bohrloch kann erfindungsgemäß vorgesehen sein, daß die Dübelhülse Verformungen an ihrer Außenseite zu ihrer Zentrierung aufweist.

Diese können insbesondere als Sicken mit in Axialrichtung der Dübelhülse laufender Längsrichtung ausgebildet sein. Solche Sicken lassen sich bei der Herstellung der Dübelhülse aus Drahtgeflecht mit geringem Aufwand ausbilden. Beispielsweise können drei gleichmäßig über den Umfang verteilte derartige Verformungen vorgesehen sein.

Erfindungsgemäß kann vorgesehen sein, daß die Dübelhülse an ihrem in das Innere des Bohrlochs gerichteten Ende geschlossen ist, damit dort ein Austreten des aushärtenden Materials in eine möglicherweise zu tiefe Bohrung verhindert wird.

In Weiterbildung der Erfindung kann vorgesehen sein, daß der geschlossene Boden der Dübelhülse trichterartig oder stufenartig ausgebildet ist. Bei entsprechender korrekter Abstimmung zwischen der Länge der Dübelhülse und der Länge des Verbindungselements kann auch hiermit eine Ausrichtung des inneren Endes des Verbindungselements gegenüber der Dübelhülse erfolgen.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: einen Längsschnitt durch eine Dübelhülse nach der Erfindung;
- Fig. 2: eine Stirnansicht der Dübelhülse von unten in Fig. 1.

Die in den Figuren dargestellte Dübelhülse ist insgesamt aus einem Drahtgeflecht hergestellt, was im einzelnen nicht dargestellt ist, da ein derartiges Drahtgeflecht bekannt ist. Die Dübelhülse ist einstückig hergestellt. Sie weist die Form eines Zylinders auf, der an seinem in das Innere des Dübellochs gerichteten Ende einen geschlossenen Boden 1 enthält. Der Boden 1 schließt einen flachzylindrischen Bereich 2 ab, der über eine Schulter 3 in einen weiteren flachzylindrischen Bereich 4 übergeht. Auch dieser flachzylindrische Bereich 4, dessen axiale Erstreckung der des ersten flachzylindrischen Bereichs 2 gleich ist, geht über eine Schulter 5 in einen weiteren flachzylindrischen Bereich 6 über. Dieser schließt sich über eine nochmalige Durchmessererweiterung an den zylindrischen Bereich 7 der Dübelhülse an.

An dem gegenüberliegenden äußeren Ende 8 ist das Drahtgeflecht der Dübelhülse zunächst etwa rechtwinklich nach außen gebogen und von dort um 180° wieder nach innen gebogen. Dadurch entsteht ein Flansch 9, in dem das Drahtgeflecht doppelt gelegt ist.

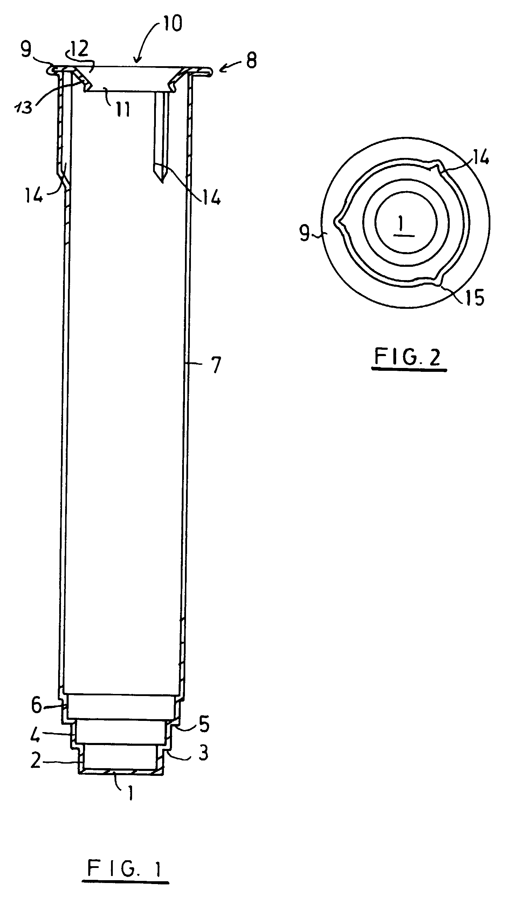

An den senkrecht zur Längsachse der Dübelhülse verlaufenden Flansch 9 schließt sich dann eine Trichtereinrichtung 10 an, in der das Drahtgeflecht zunächst unter einem Winkel von etwa 45° schräg nach innen gebogen ist. An der engsten Stelle der Trichtereinrichtung ist somit ein Loch 11 gebildet, das konzentrisch zum zylindrischen Teil 7 der Dübelhülse angeordnet ist. Die schräg verlaufende Seitenwand 12 des Trichters 10 bildet eine Einführhilfe für den in Fig. 1 von oben in die Dübelhülse einzusetzenden Schraubbolzen, der das Verbindungselement bildet. Es wird ein Verbindungselement verwendet, dessen Außendurchmesser etwa dem Innendurchmesser des Lochs 11 entspricht. Der Rand des Lochs 11 liegt mit deutlichem radialem Abstand vor der Wand der Dübelhülse in ihrem zylindrischen Bereich 7.

Die Seitenwand 12 der Trichtereinrichtung 10 bildet einen hinterschnittenen Raum 13, der unmittelbar radial außerhalb des Lochs 11 angeordnet ist.

Im Bereich ihres äußeren Endes 8 enthält die Dübelhülse drei nach außen gerichtete sickenartige Vorsprünge 14, die jeweils eine in Längsrichtung der Dübelhülse verlaufende Außenkante 15 aufweisen. Diese Vorsprünge 14, die von der Innenseite der Dübelhülse nach außen geformt sind, bilden eine Zentrierung der Dübelhülse am äußeren Rand des Dübellochs.

Die in Fig. 1 und 2 dargestellte Dübelhülse läßt sich aus einem Stück Drahtgeflecht mit geringem Aufwand herstellen. Sie wird in der dargestellten Weise in ein Dübelloch eingesetzt, bis der Flansch 9, der über die Kanten 15 der Sicken 14 vorspringt, an der Oberfläche der Wand anliegt. Anschließend wird in das Innere der Dübelhülse durch die Öffnung 11 der Trichtereinrichtung 10 mit Hilfe eines geeigneten Geräts die später aushärtende Masse eingebracht. Anschließend wird das Verbindungselement, beispielsweise ein Gewindebolzen, durch das Loch 11 der Trichtereinrichtung 10 in das Innere der Dübelhülse eingeschoben. Dabei wird das in der Dübelhülse enthaltene Material radial nach außen verdrängt, so daß es durch die Maschen des Drahtgeflechts der Dübelhülse nach außen dringt und dort auch den Raum zwischen der Dübelhülse 7 und dem Bohrloch ausfüllt. Aufgrund der zentrierten Anordnung des Verbindungselements zu der Dübelhülse ist im Bereich zwischen dem Verbindungselement und der Dübelhülse überall das aushärtende Material vorhanden. Beim Eindringen wird das Material auch in Richtung auf das äußere Ende 8 der Dübelhülse gedrückt, so daß es dort den Raum zwischen Verbindungselement und Dübelhülse ausfüllt. Aufgrund des Hinterschnitts 13 wird das Material dort festgehalten, so daß es auch dort nur radial ausweichen kann. Ein Herausquellen aus der Trichtereinrichtung 10 wird durch die Abmessungen des Verbindungselements ebenfalls verhindert.

Das Verbindungselement kann sich in seinem vorderen Bereich ebenfalls gegenüber der Dübelhülse 7 zentrieren, da es dort durch die allmähliche Durchmesserverringerung ebenfalls zur Mitte gelenkt wird.

## Patentansprüche

1. Dübel mit
1.1 einer zur Aufnahme einer aushärtenden Masse bestimmten zylindrischen Dübelhülse, die
1.1.1 aus Drahtgeflecht hergestellt ist und
1.1.2 im Bereich ihres äußeren Endes (8) einen Flansch (9) aufweist, sowie mit
1.2 einem Verankerungselement, das
1.2.1 zur Aufnahme in der Dübelhülse ausgebildet ist, wobei
1.3 die Dübelhülse im Bereich ihres äußeren Endes (8) eine Zentriertrichtereinrichtung zum Zentrieren des Verankerungselements gegenüber der Dübelhülse aufweist, dadurch gekennzeichnet, daß die Trichtereinrichtung (10) durch Umfalten des Drahtgeflechts der Dübelhülse nach innen hergestellt ist.

2. Dübel nach Anspruch 1, bei dem der Innendurchmesser der Trichtereinrichtung (10) kleiner als der Innendurchmesser der Dübelhülse ist.

3. Dübel nach Anspruch 1 oder 2, bei dem die Trichtereinrichtung (10) einen im wesentlichen geschlossenen Innenrand aufweist.

4. Dübel nach einem der vorhergehenden Ansprüche, bei dem die Trichtereinrichtung (10) einen Hinterschnitt (13) bildet.

5. Dübel nach einem der vorhergehenden Ansprüche, bei dem der Flansch (9) durch Umfalten des Drahtgeflechts nach außen hergestellt ist.

6. Dübel nach einem der vorhergehenden Ansprüche, bei dem die Dübelhülse nach außen vorspringende Verformungen (14) zu ihrer Zentrierung gegenüber dem zylindrischen Bereich (7) aufweist.

7. Dübel nach Anspruch 6, bei dem die Verformungen (14) als Sicken mit in Axialrichtung der Dübelhülse verlaufender Längsrichtung ausgebildet sind.

8. Dübel nach einem der vorhergehenden Ansprüche, bei dem die Dübelhülse an ihrem inneren Ende geschlossen ist.

9. Dübel nach Anspruch 8, bei dem der Boden (1) der Dübelhülse stufenförmig ausgebildet ist.

## Claims

1. Dowel having
1.1 a cylindrical dowel sleeve for receiving a hardening material and which
1.1.1 is made from wire gauze and
1.1.2 has in the vicinity of its outer end (8) a flange (9), as well as with
1.2 an anchoring element, which
1.2.1 is constructed for reception in the dowel sleeve, wherein
1.3 in the vicinity of its outer end (8), the dowel sleeve has a centring funnel device for centring the anchoring element relative to the dowel sleeve, characterized in that the funnel device (10) is produced by the inward bending round of the wire gauze of the dowel sleeve.

2. Dowel according to claim 1, wherein the internal diameter of the funnel device (10) is smaller than the internal diameter of the dowel sleeve.

3. Dowel according to claim 1 or 2, wherein the funnel device (10) has a substantially closed inner edge.

4. Dowel according to one of the preceding claims, wherein the funnel device (10) forms an undercut (13).

5. Dowel according to one of the preceding claims, wherein the flange (9) is produced by the outward bending round of the wire gauze.

6. Dowel according to one of the preceding claims, wherein the dowel sleeve has outwardly projecting deformations (14) for the centring thereof with respect to the cylindrical area (7).

7. Dowel according to claim 6, wherein the deformations (14) are constructed as reinforcing fins with a longitudinal direction in the axial direction of the dowel sleeve.

8. Dowel according to one of the preceding claims, wherein the inner end of the dowel sleeve is closed.

9. Dowel according to claim 8, wherein the base (1) of the dowel sleeve has a stepped construction.

## Revendications

1. Cheville avec
1.1 une gaine de cheville cylindrique destinée à la réception d'une masse durcissante, cheville qui
1.1.1 Est réalisée à partir d'un treillis métallique et qui
1.1.2 présente dans la zone de son extrémité externe (8) une bride 9, et avec
1.2 Un élément d'ancrage, qui
1.2.1 Est conçu pour le logement dans l'enveloppe de cheville,
1.3 L'enveloppe de cheville présentant dans la zone de son extrémité externe (8), un dispositif de centrage pour le centrage de l'élément d'ancrage par rapport à l'enveloppe de cheville, caractérisée en ce que le dispositif en entonnoir (10) est réalisé par repliage du treillis métallique de l'enveloppe de cheville vers l'intérieur.

2. Cheville selon la revendication 1, où le diamètre interne du dispositif en entonnoir (10) est inférieure au diamètre interne de l'enveloppe de cheville.

3. Cheville selon la revendication 1 ou 2, où le dispositif en entonnoir (10) présente un bord interne sensiblement fermé.

4. Cheville selon l'une des revendications précédentes, où le dispositif en entonnoir (10) forme une contre-dépouille (13).

5. Cheville selon l'une des revendications précédentes, où la bride (9), est réalisée par repliage du treillis métallique vers l'extérieur.

6. Cheville selon l'une des revendications précédentes, où l'enveloppe de cheville présente des déformations (14) saillant vers l'extérieur pour son centrage vis-à-vis de la zone cylindrique (7).

7. Cheville selon la revendication 6, où les déformations (14) sont des moulures avec une direction longitudinale s'étendant dans le sens axial de l'enveloppe de cheville.

8. Cheville selon l'une des revendications précédentes, où l'enveloppe de cheville est fermée à son extrémité interne.

9. Cheville selon la revendication 8, où le fond (1) de l'enveloppe de cheville est étagée.
